# EUROPEAN PATENT APPLICATION

(11) **EP 2 746 915 A1**
(43) Date of publication of application: **25.06.2014**
(21) Application number: 12008404.1
(22) Date of filing: 18.12.2012
(51) Int. Cl.: G06F 3/0482, G06F 3/0484, H02P 6/00

(54) **Graphical user interface for configuring electric motor drives**

(71) Applicant: Danfoss Power Electronics A/S, 6300 Gråsten (DK)
(72) Inventor: Ellegaard Andersen, René, 6600 Vejen (DK); Henseler, Wolfgang, 63075 Offenbach am Main (DE)
(74) Representative: Whiting, Gary

(57) **Abstract**

A user interface is described for configuring a motor drive for an electric motor. The user interface enables a user to be presented with a hierarchy of menus, to navigate through that hierarchy and to provide configuration data. The hierarchy of menus comprises one or more wheel menus having selectable segments, one or more arrays of selectable virtual buttons and one or more configuration data entry points.

## Description

### FIELD OF THE INVENTION

The present invention relates to a user interface for configuring electric motor drives.

### BACKGROUND OF THE INVENTION

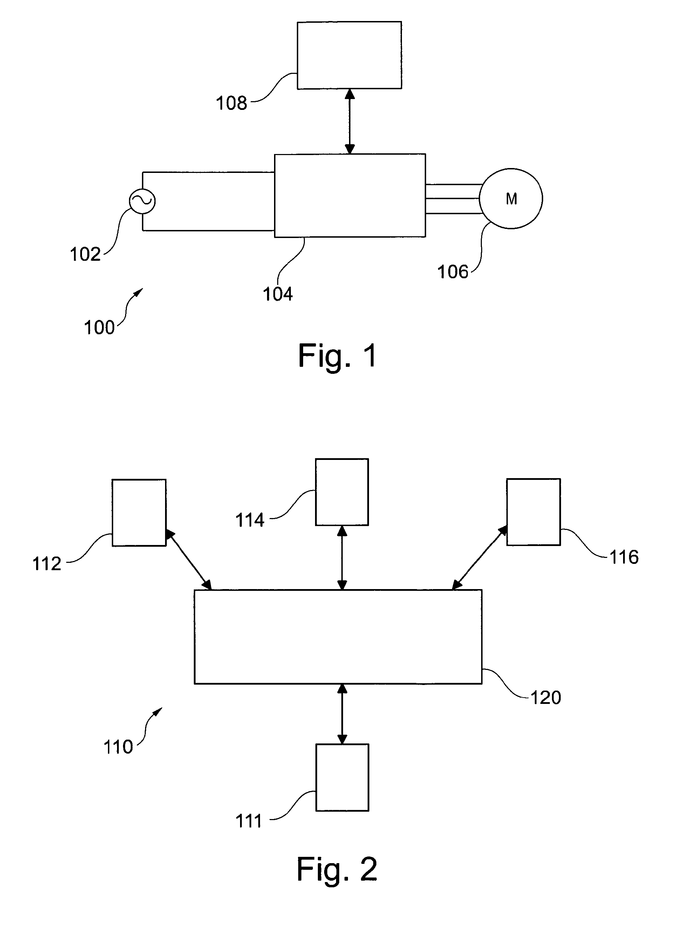

Figure 1 is a block diagram, indicated generally by the reference numeral 100, of a known motor drive system. The motor drive system 100 comprises a power supply 102, a motor drive 104, a motor 106 and a user interface 108. As is well known in the art, the power supply 102 is typically an AC power supply. The motor drive 104 incorporates an inverter that first converts the AC power supply into a DC link voltage and uses semiconductor switches to convert the DC link into one or more AC signals used to drive the motor 106 at a desired frequency.

Motor drives, such as the motor drive 104 are typically extremely flexible products with very many configurable settings. The user interface 108 is provided to enable a user (or some other interaction system) to configure the motor drive 104 according to the specific needs of the user.

Existing motor drive user interfaces are cumbersome and require detailed knowledge of both the motor drive itself and of the configuration process. Not only are existing user interfaces typically cumbersome for expert users, such user interfaces are sufficiently complicated to preclude novice users from configuring motor drives at all.

The graphical user interface 108 of the motor drive system 100 may be provided as part of the motor drive 104 or may be provided in direct communication with the motor drive 104. For example, a cable may connect the user interface 108 and the motor drive 104. Other configurations, such as wireless configurations, are possible.

Figure 2 is a block diagram, indicated generally by the reference numeral 110, of another known motor drive system. The motor drive system 110 comprises a user interface 111 that is in communication with many motor drives (a first motor drive 112, a second motor drive 114 and an nth motor drive 116 are shown in Figure 2 by way of example). Each motor drive would typically be connected to a power supply and to a motor (as in Figure 1); these circuit elements are omitted from Figure 2 for clarity.

The user interface 111 and each of the motor drives is connected to a network 120, such as the Internet, WLAN or some other network. The user interface 111 is therefore able to configure a number of motor drives. Indeed, the user interface 111 may be required to configure motor drives of many different types. The system 110 offers more flexibility than the system 100 described above, but the requirements for the user interface 111 are even more demanding.

It has proved difficult to provide user interfaces, such as the user interfaces 108 and 111, that provide the required functionality in a user-friendly manner.

The present invention seeks to address at least some of the problems outlined above.

### SUMMARY OF THE INVENTION

The present invention provides a method for configuring a motor drive for an electric motor, the method comprising: using a graphical user interface to present a user with a hierarchy of menus, wherein the hierarchy of menus comprises: one or more wheel menus, each wheel menu having a plurality of selectable segments, wherein a segment of the wheel menu selected by the user defines the next level in the hierarchy of menus; one or more arrays of virtual buttons, each array comprising a plurality of virtual buttons, wherein a selection of one of said plurality of virtual buttons by a user defines the next level in the hierarchy of menus; and one or more configuration data entry points; receiving navigation data from the user at one or more of said wheel menus and/or one or more of said arrays of virtual buttons; navigating through the hierarchy of menus in accordance with the navigation data received from the user; receiving configuration data from the user at at least one of the one or more configuration data entry points; and configuring the motor drive in accordance with said configuration data. The graphical user interface could be provided at a motor drive being configured, in direct communication with a motor drive being configured, or remote from a motor drive being configured. The graphical user interface may be configured to be able to configure a single motor drive, a plurality of motor drives of the same type and/or a plurality of motor drives of different types. Accordingly, the invention is very flexible.

The expression "motor drive" is used herein to refer to a traditional motor drives (such as the motor drive 104 described above with reference to Figure 1), soft starters, and active harmonic filters. A soft starter typically reduces motor torque during a start-up phase of that motor and can be thought of a simplified version of a traditional motor drive. An active harmonic filter may provide the functionality of motor drive and additionally provide a filter to keep harmonics introduced to an AC power supply by the motor drive within acceptable limits.

The present invention also provides an apparatus for configuring a motor drive for an electric motor, the apparatus comprising a display for presenting a user with a hierarchy of menus and an interface to enable the user to navigate through that hierarchy and to provide configuration data, wherein the hierarchy of menus comprises: one or more wheel menus, each wheel menu having a plurality of selectable segments, wherein a segment of the wheel menu selected by the user defines the next level in the hierarchy of menus; one or more arrays of virtual buttons, each array comprising a plurality of virtual buttons, wherein a selection of one of said plurality of virtual buttons by a user defines the next level in the hierarchy of menus; and one or more configuration data entry points. The interface may be configured to receive navigation data from said user at one or more of said wheel menus and/or at one or more of said arrays of virtual buttons.

The interface could be (or could at least include) a touch screen, although many alternatives interfaces could, of course, be provided. The display and the interface may be provided by a common touch screen.

The present invention enables the user to provide navigation data to move around a hierarchy of menus in a simple and user-friendly manner.

In some forms of the invention, at least one of said wheel menus is configured to be displayed in a first portion of the user interface and, in response to the user selecting one of the plurality of selectable segments, the next level in the hierarchy of menus is presented in a second portion of the menu, with the wheel menu remaining visible in the first portion. This arrangement has the advantage of allowing a user to view two levels of the hierarchy of menus at the same time. Moreover, in response to the user selecting said one of the plurality of selectable segments, the wheel may be positioned such that the selected segment is in a predefined position. By way of example, the wheel may be effectively rotated (if necessary) to provide the selected option in a defined position, with that section expanding to show options. The rotation of the wheel menu may be animated: alternatively, the wheel menu may jump from its original position to the defined position. In one form of the invention, the said defined position is adjacent to the second portion of the menu. An advantage of rotating the selected menu option to a position adjacent to the second portion is that the two levels of the hierarchy are both visible and are presented to the user in a manner in which the real estate of the display is used efficiency. This is particularly advantageous if the size of the display is limited.

In some forms of the invention, at least one of said wheel menus is configured to be displayed in a first portion of the user interface and wherein, in response to the user selecting one of the plurality of selectable segments, the next level in the hierarchy of menus is presented in a new display such that the wheel menu is no longer visible. This might be necessary if lots of options exist in the next level of the hierarchy. This might also be necessary in circumstances where the display size is limited.

In some forms of the invention, at least one of said wheel menus is configured such that, in response to the user selecting one of the plurality of selectable segments, the selected segment changes visual appearance in the graphical user interface (for example, by getting larger and/or changing colour). Furthermore, in some forms of the invention, in response to the user selecting said one of said selected segments, unselected segments of the plurality of selectable segments change visual appearance in the graphical user interface in a different manner to the change in the visual appearance of the selected segment. By way of example, a selected segment of a wheel menu may get larger, whilst unselected segments of a wheel menu get smaller. This may provide the user with the impression that the selected segment effectively moves towards the user, whilst the unselected segments effectively move away from the user.

For some (or, indeed, all) of the virtual buttons, the selection of that virtual button may result in a change in the visual appearance of that button in the graphical user interface. In a similar manner, wheel segments can change appearance when selected (in addition to, or instead of, rotating to a predefined position). A virtual button may change appearance by changing colour, by being shaded, and/or by presenting text in the button in a different format (such as a bold format). Alternatively, or in addition, a virtual button may change in visual appearance by expanding to fill a larger area of the graphical user interface. This may, for example, mimic a 3-D effect in which the button gets larger on the screen when selected. Changing the visual appearance gives the user immediate feedback that a particular selection has been made. Once again, this aids the intuitive nature of the user interface.

Furthermore, in some forms of the invention, displayed virtual buttons other than the selected virtual button may change visual appearance in the graphical user interface in a different manner to a selected virtual button. Thus, for example, a selected virtual button may increase in size and unselected virtual buttons may decrease in size.

The user may select a virtual button using a touchscreen. Similarly, the user may select a segment of a wheel menu using a touchscreen. Of course, other forms of user interaction could be provided, such as a computer mouse or some other form of pointer.

In many forms of the invention, in response to the selection by the user of one of the plurality of virtual buttons in an array of virtual buttons, the graphical interface is used to present the user with one of: a wheel menu having a plurality of selectable segments, wherein a segment of the wheel menu selected by the user defines the next level in the hierarchy of menus; a second plurality of virtual buttons, wherein a selection of one of said second plurality of virtual buttons by a user defines the next level in the hierarchy of menus; and a configuration data entry point. By way of example, the selection of a virtual button may turn that button into a wheel menu by presenting selectable sub-options to the user. Thus, the options of the wheel menu would be the next level in the menu hierarchy below the selected virtual button.

In many forms of the invention, in response to the selection by the user of one of the plurality of selectable segments of a wheel menu, the graphical interface is used to present the user with one of: a second wheel menu having a second plurality of selectable segments, wherein a segment of the second wheel menu selected by the user defines the next level in the hierarchy of menus; a plurality of virtual buttons, wherein a selected one of said plurality of virtual buttons by a user defines the next level in the hierarchy of menus; and a configuration data entry point.

The invention can be used to provide an entirely visual user interface (e.g. not requiring textual input at all). This is considerably simpler for the end user than many prior art solutions and can avoid problems with poor literacy of end users and can avoid some costs associated with translation of instructions to end users. Moreover, providing an increasingly (or entirely) visual interface lessens (or removes) the need to tailor a particular user interface to different markets (such as different geographic markets).

The configuration data menu can take many forms, such as text entry or with drop-down boxes or question/answer in a wizard format, or any other suitable data entry system.

### BRIEF DESCRIPTION OF THE DRAWINGS

The invention will now be described in further detail with reference to the following schematic drawings, in which:
Figure 1 shows a known motor drive system including a user interface;
Figure 2 shows another known motor drive system including a user interface
Figure 3 shows a graphical user interface showing a plurality of virtual buttons in accordance with an aspect of the present invention;
Figure 4 shows the graphical user interface of Figure 3, in which one of the virtual buttons has been selected and is presented as a wheel menu;
Figure 5 shows the graphical user interface of Figure 4, in which one segment of the wheel menu has been selected;
Figure 6 shows the graphical user interface of Figure 5, in which the selected wheel menu segment has been expanded to reveal an array of virtual buttons;
Figure 7 shows the graphical user interface of Figure 6, in which one of the virtual buttons has been selected;
Figure 8 shows the graphical user interface of Figure 7, in which the selected virtual button is expanding;
Figure 9 shows a graphical user interface showing a number of drive options available for selection in accordance with the principles of the present invention;
Figure 10 shows the graphical user interface of Figure 9, in which one of the drive options has been selected;
Figure 11 shows the graphical user interface of Figure 10, in which the virtual button for the selected drive option is expanding;
Figure 12 shows a graphical user interface showing an exemplary data entry point in accordance with the principles of the present invention;
Figure 13 shows a wheel menu for an individual drive defined in accordance with the principles of the present invention; and
Figure 14 shows the graphical user interface of Figure 13, showing a selected wheel menu option in expanded form.

### DETAILED DESCRIPTION OF THE INVENTION

The present invention provides a user interface for configuring a motor drive for an electric motor. The user interface may be connectable to a single motor drive (for example using a configuration such as that shown in Figure 1). Alternatively, the user interface may be connectable to many motor drives (for example using a configuration such as that described above with reference to Figure 2). The skilled person will, however, be aware of many alternatives configurations that could be provided.

The user interface of the present invention provides an intuitive interface for a user. A number of exemplary graphical user interfaces describing various features of the invention are described below by way of example.

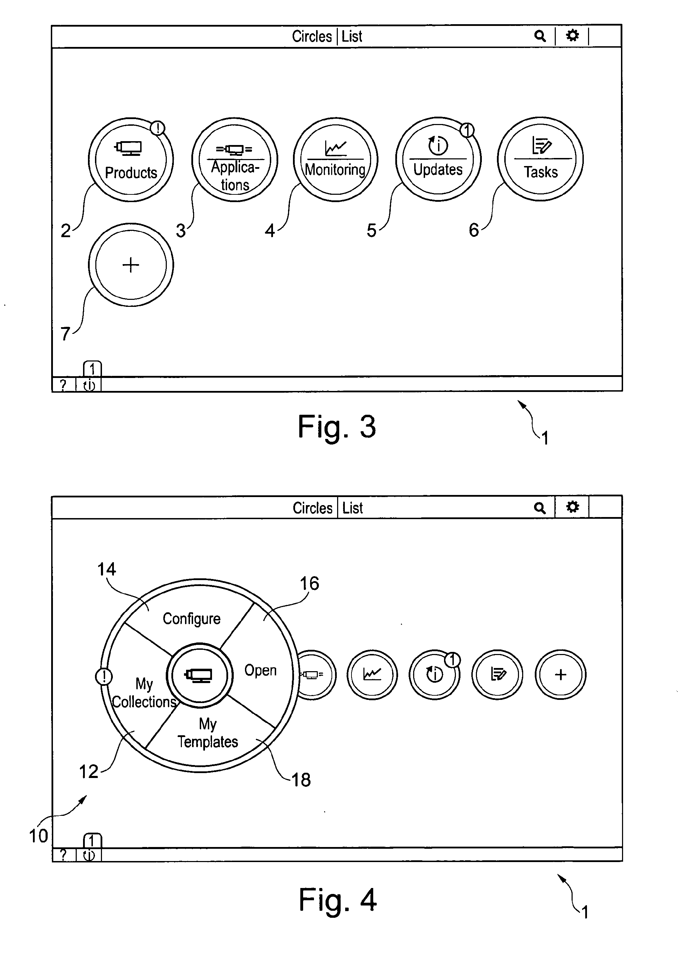

Figure 3 shows a graphical user interface, indicated generally by the reference numeral 1, showing a plurality of virtual buttons in accordance with an aspect of the present invention. The user interface 1 provides a user with access to products (virtual button 2), applications (virtual button 3), monitoring (virtual button 4), updates (virtual button 5) and tasks (virtual button). Additional functions can be provided via virtual button 7. Of course, the various options shown in Figure 3 are provided by way of example only.

In order to navigate through the user interface, the user must select one of the options. In the present example, the user selects the "products" virtual button 2.

A variety of means may be provided for selecting the virtual button 2. For example, the user interface may be provided on a touchscreen that enables the user to simply touch the screen where the virtual button 2 is displayed. This is a very intuitive way to enable a user to navigate through the options provided by the user interface, but many alternatives exist. For example, a cursor may be provided, or a pointer device, such as a conventional computer mouse, may be provided.

Figure 4 shows the graphical user interface 1, in which the product virtual button has been selected and is presented as a wheel menu, indicated generally by the reference numeral 10. The wheel menu 10 includes a number of segments, each of which can be selected by the user. In the example shown in Figure 4, the wheel menu includes a "My collections" segment 12, a "configure" segment 14, an "open" segment 16 and a "My templates" segment 18. The segments of the wheel menu 10 represent the layer of the menu hierarchy below the product button 2.

As shown in Figure 4, the selected virtual button (the button 2) effectively expands due to the provision of the selected segments. When the user selects the virtual button 2, the selected button appears to come towards the user (by virtue of getting larger). This provides intuitive feedback to the user that his interaction with the user interface has resulted in an action taking place. At the same time, virtual buttons that are not selected by the user may get smaller. This has the effect of the non-selected virtual button appears to move away from the user.

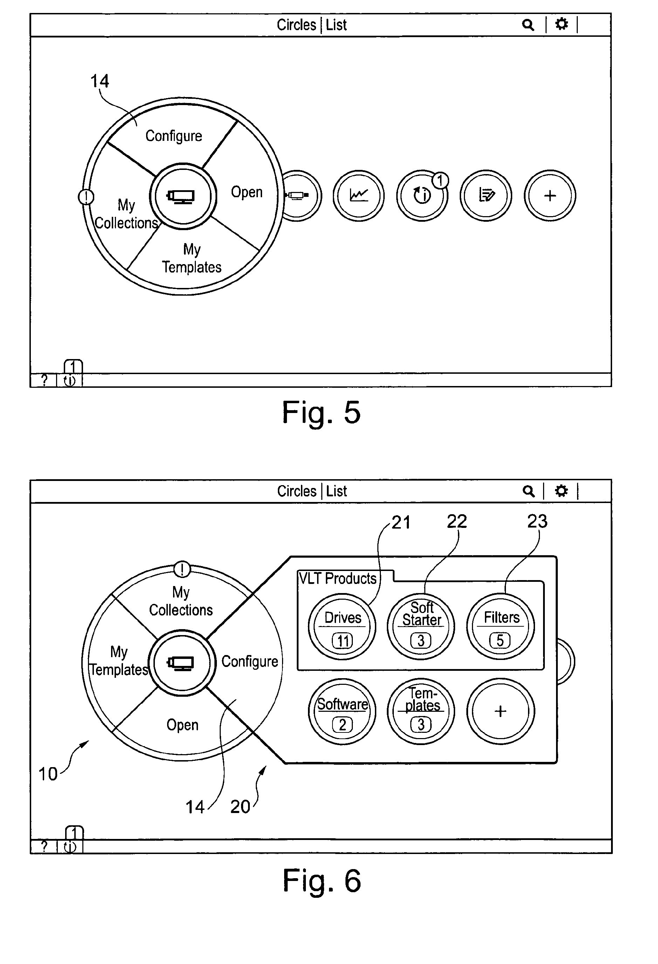

Figure 5 shows the graphical user interface of Figure 4, in which the "configure" segment 14 has been selected by the user. The user interface demonstrates that the configure segment has been selected by changing the appearance of that segment in some way, for example by changing the colour of the segment. Changing the appearance of the selected segment provides the user with instant and intuitive feedback that his interaction with the interface has resulted in an action. Other feedback could be given in addition to, or instead of, changing the appearance of the segment; for example, a sound could be emitted or the size of the selected segment could be increased (and/or the size of unselected segments could be decreased).

Figure 6 shows the graphical user interface of Figure 5, in which the selected wheel segment (the configure segment 14) has been expanded to reveal an array of virtual buttons, the array being indicated generally by the reference numeral 20. As shown in Figures 3 to 6, the wheel menu 10 occupies a first area of the graphical user interface 1. The expanded array of virtual buttons 20 occupies a second area of the graphical user interface 1 such that the wheel 10 is still visible.

In the example of Figure 6, the wheel is rotated such that the configure segment 14 is adjacent to the second area in which the array 20 is to be presented. This enables the user interface to present the wheel 10 and the array 20 in a convenient and efficient manner. In particular, the real estate of the display is used in an efficient manner whilst enabling the user to see both the wheel 10 and the array 20. The rotation of the wheel menu 10 provides further feedback to the user that his input has resulted in an action being taken, thereby improving the intuitive nature of the feedback to the user.

The array 20 includes a number of virtual buttons, such as a "drives" button 21, a "soft starter" button 22 and a "filters" button 23. Selecting any of those virtual buttons enables the user to navigate further through the menu provided by the graphical user interface.

Thus, the user interface enables a user to provide configuration information for drives (by selecting button 21), soft starters (by selecting button 22) and filters (by selecting button 23). A soft starter typically reduces motor torque during a start-up phase of that motor. In this context, "filters" typically refer to filters that form part of a motor controller that are used to mitigate the effects of harmonics that might be generated by a motor drive. For example, a motor drive may include an active filter provided to keep harmonics introduced to an AC power supply by the motor drive within acceptable limits.

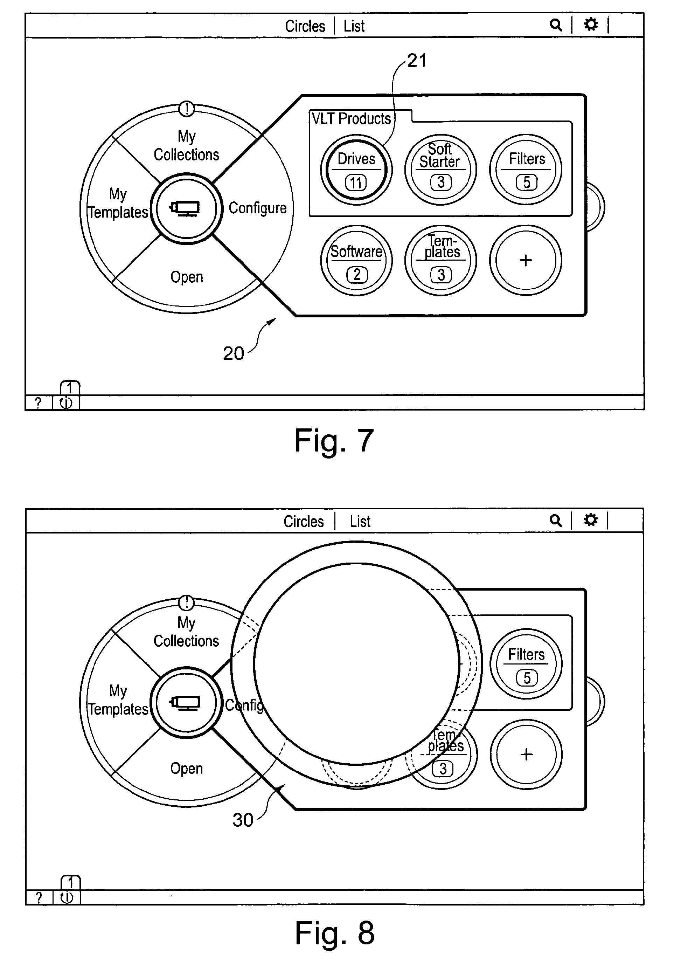

Figure 7 shows the graphical user interface of Figure 6, in which the "drives" virtual button 21 has been selected. As before, the selection of the virtual button 21 is indicated by changing the appearance of that virtual button in some way, for example by changing the colour of the virtual button.

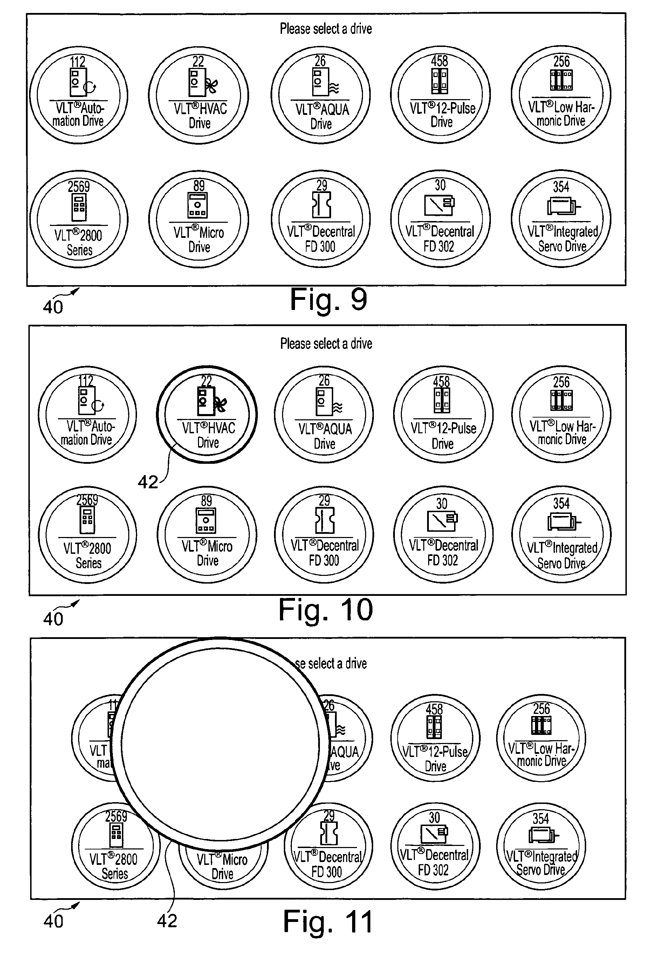

Figure 8 shows the graphical user interface of Figure 7, in which the selected virtual button (the drives button 21) is expanding. The virtual button expands to cover the entire graphical user interface (as shown in Figure 9, which is described further below). The use of a virtual button that expands (rather than just changing the screen to that shown in Figure 9) provides a more intuitive user experience. Note that, as described above with reference to Figure 4, the non-selected virtual buttons may reduce in size. Thus, the selected virtual button may appear to come towards the user, whilst non-selected virtual buttons may appear to move away from the user.

Figure 9 is a view of the user interface, indicated generally by the reference numeral 40, showing the virtual button 21 in fully expanded form. The display 40 provides a number of drive options available for selection to the user.

As shown in Figure 10, in the present example the user selected the "VLT® HVAC Drive" virtual button 42. In common with earlier examples, the selection of the virtual button 42 is indicated by changing the appearance of that button and then, as shown in Figure 11, the virtual button 42 expands to cover the graphical user interface. (Although not shown in the example of Figure 10, non-selected virtual buttons may shrink as the selected virtual button expands.)

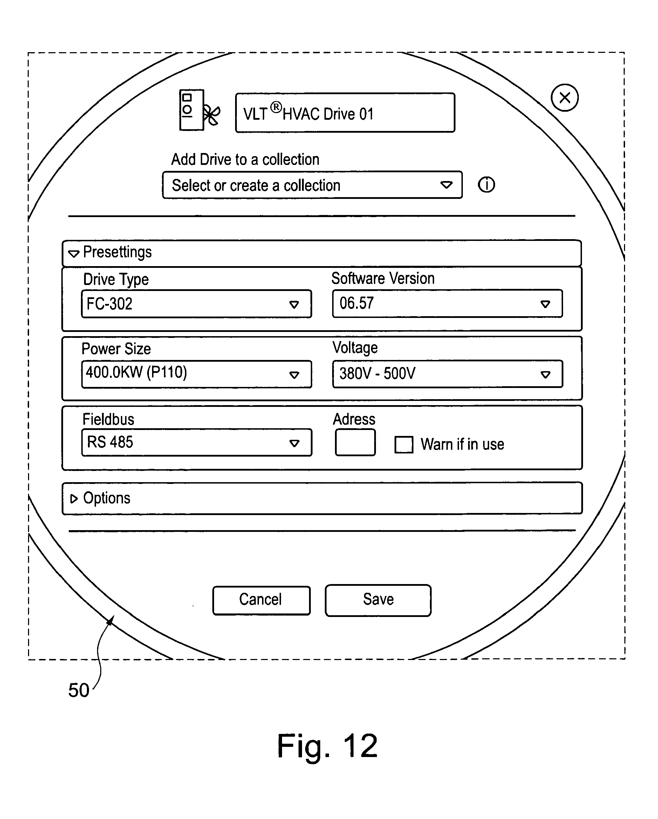

Figure 12 shows a data entry screen 50 that results from selecting the virtual button 42. The data entry screen 50 is one of many data entry points that can be reached by a user navigating around the various menus provided by the graphical user interface. The menus are hierarchical, allowing a convenient and user-friendly approach to providing the user with mechanisms for providing the configuration data that may be required for any particular embodiment of the invention.

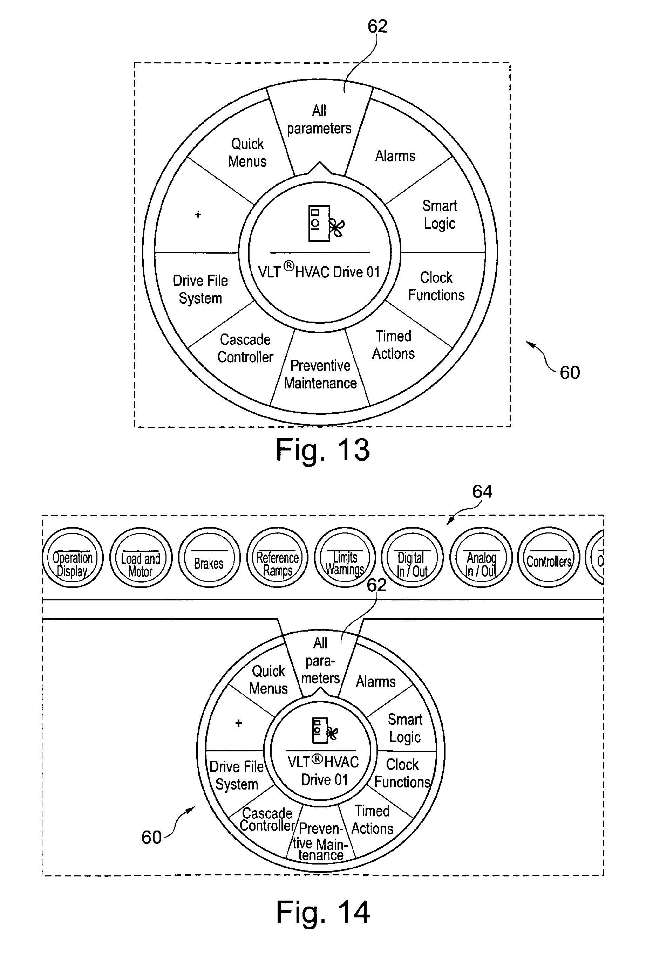

Figure 13 shows a wheel menu, indicated generally by the reference numeral 60, for the individual drive defined in the data entry screen 50 shown in Figure 12. As with the wheel menu 10 described above, the wheel menu 60 includes a plurality of segments that may be selected by the user. In the example of Figure 13, the "All parameters" segment 62 is selected by the user and this selection is indicated by changing the appearance of the segment 62.

Figure 14 shows the graphical user interface of Figure 13, showing the selected wheel menu segment 62 in expanded form. The expanded segment 62 presents a plurality of virtual buttons 64 to the user. Note that in this example, the wheel menu 60 has not been rotated, but it could be in alternative forms of the invention (as described above with reference to Figure 6).

The virtual buttons 64 each provide the user with a link to a separate data entry point, for example for providing data relating to a display, load and motor data, brakes etc.

The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the spirit and scope of the invention.

## Claims

1. A method for configuring a motor drive for an electric motor, the method comprising:
using a graphical user interface to present a user with a hierarchy of menus, wherein the hierarchy of menus comprises:
one or more wheel menus, each wheel menu having a plurality of selectable segments, wherein a segment of the wheel menu selected by the user defines the next level in the hierarchy of menus;
one or more arrays of virtual buttons, each array comprising a plurality of virtual buttons, wherein a selection of one of said plurality of virtual buttons by a user defines the next level in the hierarchy of menus; and
one or more configuration data entry points;
receiving navigation data from the user at one or more of said wheel menus and/or one or more of said arrays of virtual buttons;
navigating through the hierarchy of menus in accordance with the navigation data received from the user;
receiving configuration data from the user at at least one of the one or more configuration data entry points; and
configuring the motor drive in accordance with said configuration data.

2. A method as claimed in claim 1, wherein at least one of said wheel menus is configured to be displayed in a first portion of the user interface and wherein, in response to the user selecting one of the plurality of selectable segments, the next level in the hierarchy of menus is presented in a second portion of the menu, with the wheel menu remaining visible in the first portion.

3. A method as claimed in claim 2, wherein in response to the user selecting said one of the plurality of selectable segments, the wheel is positioned such that the selected segment is in a predefined position.

4. A method as claimed in claim 3, wherein the defined position is adjacent to the second portion of the menu.

5. A method as claimed in any preceding claim, wherein at least one of said wheel menus is configured to be displayed in a first portion of the user interface and wherein, in response to the user selecting one of the plurality of selectable segments, the next level in the hierarchy of menus is presented in a new display such that the wheel menu is no longer visible.

6. A method as claimed in any preceding claim, wherein at least one of said wheel menus is configured such that, in response to the user selecting one of the plurality of selectable segments, the selected segment changes visual appearance in the graphical user interface.

7. A method as claimed in claim 6, wherein, in response to the user selecting said one of said selected segments, unselected segments of the plurality of selectable segments change visual appearance in the graphical user interface in a different manner to the change in the visual appearance of the selected segment.

8. A method as claimed in any preceding claim, wherein, for at least one of the virtual buttons, in response to the selection of said virtual button, the virtual button changes visual appearance in the graphical user interface.

9. A method as claimed in claim 8, wherein displayed virtual buttons other than the selected virtual button change visual appearance in the graphical user interface in a different manner to the selected virtual button.

10. A method as claimed in claim 8 or claim 9, wherein the virtual button changes in visual appearance by expanding to fill a larger area of the graphical user interface.

11. A method as claimed in any preceding claim, further comprising, in response to the selection by the user of one of the plurality of virtual buttons in an array of virtual buttons, using the graphical interface to present the user with one of:
a wheel menu having a plurality of selectable segments, wherein a segment of the wheel menu selected by the user defines the next level in the hierarchy of menus;
a second plurality of virtual buttons, wherein a selection of one of said second plurality of virtual buttons by a user defines the next level in the hierarchy of menus; and
a configuration data entry point.

12. A method as claimed in any preceding claim, further comprising, in response to the selection by the user of one of the plurality of selectable segments of a wheel menu, using the graphical interface to present the user with one of:
a second wheel menu having a second plurality of selectable segments, wherein a segment of the second wheel menu selected by the user defines the next level in the hierarchy of menus;
a plurality of virtual buttons, wherein a selection of one of said plurality of virtual buttons by a user defines the next level in the hierarchy of menus; and
a configuration data entry point.

13. An apparatus for configuring a motor drive for an electric motor, the apparatus comprising a display for presenting a user with a hierarchy of menus and an interface to enable the user to navigate through that hierarchy and to provide configuration data, wherein the hierarchy of menus comprises:
one or more wheel menus, each wheel menu having a plurality of selectable segments, wherein a segment of the wheel menu selected by the user defines the next level in the hierarchy of menus;
one or more arrays of virtual buttons, each array comprising a plurality of virtual buttons, wherein a selection of one of said plurality of virtual buttons by a user defines the next level in the hierarchy of menus; and
one or more configuration data entry points.

14. An apparatus as claimed in claim 13, wherein the interface comprises a touch screen.

15. An apparatus as claimed in claim 14, wherein the display and interface are provided by the same touch screen.
